# EUROPEAN PATENT APPLICATION

(11) **EP 1 674 384 A2**
(43) Date of publication of application: **28.06.2006**
(21) Application number: 05111667.1
(22) Date of filing: 05.12.2005
(51) Int. Cl.: B62J 1/16

(54) **Seat for carrying children on bicycles or the like**

(30) Priority: 21.12.2004 IT MO20040022 U
(71) Applicant: Bellelli S.R.L., 45021 Badia Polesine RO (IT)
(72) Inventor: Bellelli, Tiziano, 45100 Rovigo (IT)
(74) Representative: Modiano, Micaela Nadia

(57) **Abstract**

A seat (1) for carrying children on bicycles or the like, which comprises a first element (2) and a second element (3) which are adapted to form respectively a back and a sitting surface for a child (B); an upper portion (4) of the first element (2) protrudes in the opposite direction with respect to the second element (3) and is adapted to form a receptacle for a helmet (C) for protecting the child's head (T).

## Description

The present invention relates to a seat for carrying children on bicycles or the like.

It is known that people who need to carry young children by using vehicles such as bicycles or the like normally use particular seats, which can be installed stably on the bicycle frame, generally at the handlebar or at the rear mudguard.

These seats usually have dimensions which match those of the child to be carried and are provided with belts which are adapted to retain the child in stable and safe conditions.

Conventional seats are constituted substantially by a sitting surface for the child and by a back, which depending on the height that it reaches can also act or not as a headrest and may optionally protect the head of the child in case of accident.

In some cases, in fact, the upper portion of the back, which is coplanar to the rest of said back, is at such a distance from the sitting surface that the child can rest his head against it.

Moreover, such upper portion can be provided with lateral wings which protect the sides of the child's head at the temples and cheeks.

In order to further increase safety conditions during transport, the child can conveniently wear a helmet which protects his head; such helmets can have different shapes and dimensions, but often have a strengthened and elongated rear part at the back of the child's head.

These known types of seat are not free from drawbacks, including the fact that their use by the child being transported is not always practical and functional.

Seats provided with a low back in fact normally lack a headrest, and this, in addition to constituting an inconvenient lack of comfort for the child, can also be dangerous for him, since in case of an accident during transport the head of the child is inappropriately exposed to dangerous impacts or whiplash which can endanger his safety.

Traditional seats provided with a high back instead allow to provide a support for the child's head, but nevertheless are particularly uncomfortable if the child is wearing a protective helmet.

Due to the bulk of the helmet, which is particularly substantial at the rear part, such seats in fact force the child to keep his head almost constantly bent forward with respect to his trunk, forcing him in practice to assume an unnatural and tiring posture.

The aim of the present invention is to eliminate the above-mentioned drawbacks of the background art, by providing a seat for carrying children on bicycles or the like which allows to carry children not only in extremely safe conditions but also in conditions which are extremely comfortable and practical in use both for the driver of the bicycle and for the young passenger.

Within this aim, an object of the present invention is to provide a seat which is simple, relatively easy to provide in practice, safe in use, effective in operation, and has a relatively low cost.

This aim and these and other objects that will become better apparent hereinafter are achieved by the present seat for carrying children on bicycles or the like, which comprises a first element and a second element which are adapted to form respectively a back and a sitting surface for a child, characterized in that an upper portion of said first element protrudes substantially in the opposite direction with respect to said second element and is adapted to form a receptacle for a helmet for protecting the child's head.

Further characteristics and advantages of the present invention will become better apparent from the following detailed description of a preferred but not exclusive embodiment of a seat for carrying children on bicycles or the like, illustrated by way of non-limiting example in the accompanying drawings, wherein:

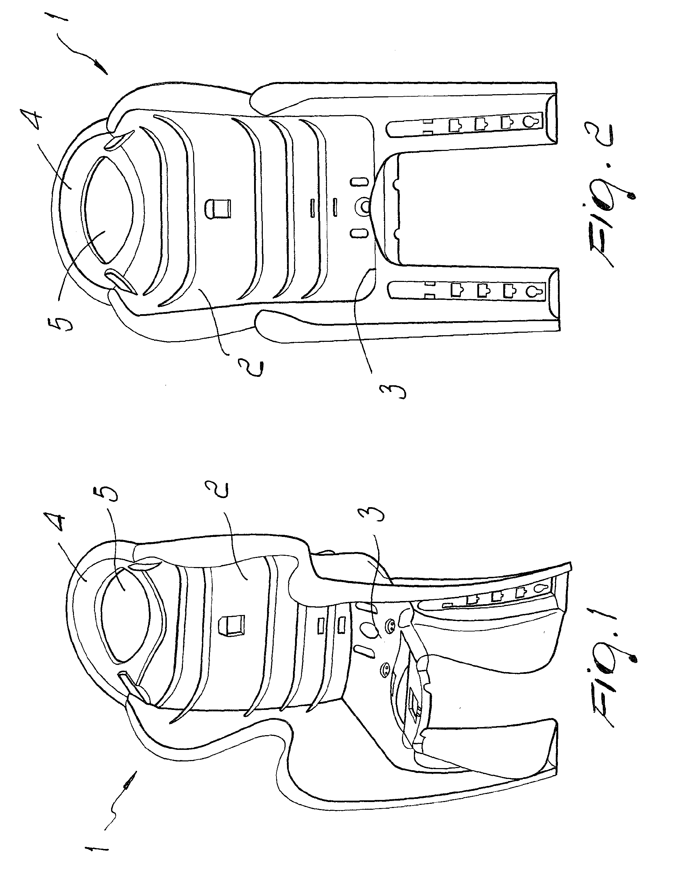

Figure 1 is a perspective view of the seat according to the invention;
Figure 2 is a front view of the seat according to the invention;

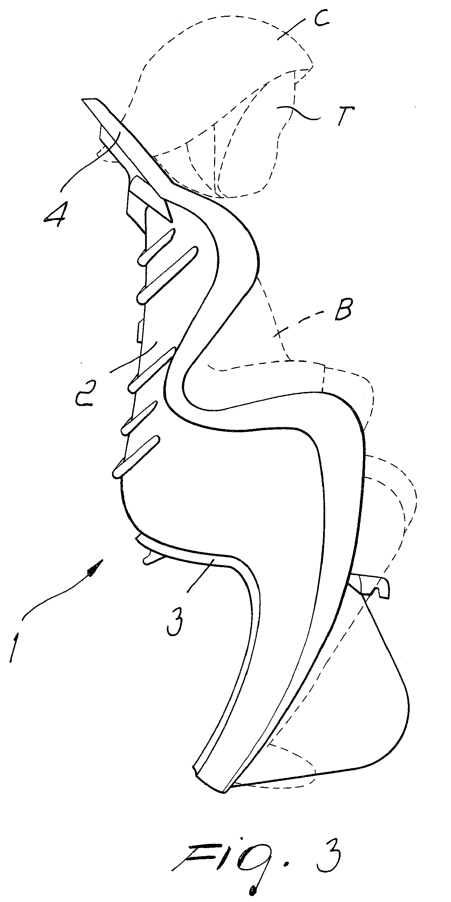

Figure 3 is a side view of the seat according to the invention.

With reference to the figures, the reference numeral 1 generally designates a seat for carrying children on bicycles or the like.

The seat 1 comprises a first element 2 and a second element 3, which are substantially flat and form respectively a back and a sitting surface for a child B to be carried on a bicycle, which is not shown in the figures.

According to the invention, an upper portion 4 of the first element 2 protrudes substantially in the opposite direction with respect to the second element 3 and forms a receptacle for a helmet C for protecting the head T of the child B.

In particular, the upper portion 4 is such that the head T, when it is arranged at said seat and despite wearing the helmet C, can be kept by the child B substantially upright with respect to the trunk instead of tilted forward as in conventional seats.

Conveniently, the upper portion 4 is oval and is provided with at least one likewise oval through opening 5; in this manner, the upper portion 4 on one side forms a handle which is particularly easy to grip even with just one hand and on the other side allows the rear part of the helmet C, which is generally very bulky, to be arranged within the opening 5.

In the particular embodiment of the present invention illustrated in the figures, the first and second elements 2 and 3 are formed monolithically as a single rigid body, but alternative embodiments are not excluded in which for example they are associated so as to be mutually articulated and able to rotate with respect to each other.

In an alternative embodiment, moreover, the first element 2 might be constituted by two or more mutually sliding portions and there might be means for adjusting its height; in this manner, whatever the height of the child B, it is possible to arrange the upper portion 4 at the head T.

Finally, the seat 1 can be fitted to the frame of the bicycle in a fixed and non-movable manner or, as an alternative, so that it can rotate about a horizontal axis which is perpendicular to the plane of symmetry of the bicycle; preferably, in this last case, it is possible to provide appropriate adjustment means, not shown in the figures, by means of which the inclination of the first element 2 with respect to the ground is adjusted, moving the seat 1 between an upright configuration and a reclined configuration.

In practice it has been found that the described invention achieves the intended aim and objects.

The particular refinement of using an upper portion which is reclined backward with respect to the child being carried, in addition to protecting and sheltering the child, in fact allows said child to keep his head upright even when wearing a protective helmet, thus allowing said child to assume a posture which is particularly comfortable and not tiring during the bicycle ride.

The invention thus conceived is susceptible of numerous modifications and variations, all of which are within the scope of the appended claims.

All the details may further be replaced with other technically equivalent elements.

In practice, the materials used, as well as the contingent shapes and dimensions, may be any according to requirements without thereby abandoning the scope of the protection of the appended claims.

The disclosures in Italian Utility Model Application No. M02004U000022 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A seat (1) for carrying children on bicycles or the like, comprising a first element (2) and a second element (3) which are adapted to form respectively a back and a sitting surface for a child (B), **characterized in that** an upper portion (4) of said first element (2) protrudes substantially in the opposite direction with respect to said second element (3) and is adapted to form a receptacle for a helmet (C) for protecting the child's head (T).

2. The seat according to claim 1, **characterized in that** said upper portion (4) is substantially oval.

3. The seat according to one or more of the preceding claims, **characterized in that** said upper portion (4) is provided with at least one through opening (5).

4. The seat according to claim 3, **characterized in that** said opening (5) is substantially oval.

5. The seat according to claim 4, **characterized in that** said upper portion (4) forms a handle.

6. The seat according to one or more of the preceding claims, **characterized in that** it comprises means for adjusting the height of said first element (2).

7. The seat according to one or more of the preceding claims, **characterized in that** it comprises means for adjusting the inclination of said first element (2) with respect to the ground.

8. The seat according to one or more of the preceding claims, **characterized in that** said first and second elements (2, 3) are provided monolithically.
